(19) **Europäisches Patentamt / European Patent Office / Office européen des brevets**

(11) **EP 2 234 403 A1**

(12) **EUROPEAN PATENT APPLICATION**
published in accordance with Art. 153(4) EPC

(43) Date of publication:
**29.09.2010 Bulletin 2010/39**

(21) Application number: **08866096.4**

(22) Date of filing: **19.11.2008**

(51) Int Cl.:
**H04N 7/32** (2006.01)

(86) International application number:
**PCT/JP2008/070991**

(87) International publication number:
**WO 2009/084340 (09.07.2009 Gazette 2009/28)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.12.2007 JP 2007339357**

(71) Applicant: **Sharp Kabushiki Kaisha**
**Osaka-shi, Osaka 545-8522 (JP)**

(72) Inventors:
- **YAMAMOTO, Tomoyuki**
  **Osaka-shi**
  **Osaka 545-8522 (JP)**
- **IKAI, Tomohiro**
  **Osaka-shi**
  **Osaka 545-8522 (JP)**

(74) Representative: **Müller - Hoffmann & Partner**
**Patentanwälte**
**Innere Wiener Strasse 17**
**81667 München (DE)**

(54) **MOVING IMAGE ENCODER AND MOVING IMAGE DECODER**

(57) A moving image encoder includes a luminance variation detection/compensation section (127). The luminance variation detection/compensation section (127) includes: a reference block surrounding image preparing section (140); a target block surrounding image preparing section (141); a luminance variation compensated image preparing section (142) for compensating for a luminance variation between frames in accordance with a result of comparison between pixels in a reference block surrounding area and those in a target block surrounding area; a luminance variation determining section (144); and a predicted image selecting switch (143). This enables the moving image encoder and a moving image decoder to compensate local luminance variations between frames while minimizing an increase in additional information (side information).

FIG. 1

EP 2 234 403 A1

**Description**

Technical Field

The present invention relates to (i) a moving image encoder for encoding a moving image so as to prepare encoded data, and (ii) a moving image decoder for decoding encoded data so as to play back a moving image.

Background Art

To avoid time redundancy in encoding a moving image, motion compensated prediction is widely employed. The motion compensated prediction starts with derivation of a motion vector indicating a displacement by which an object has moved between two frames (i.e., an encoding target frame and a reference frame). Then, a difference between the following two is encoded: a pixel value of each pixel in the encoding target frame; and a pixel value of a corresponding pixel in the reference frame, the corresponding pixel being located away from the pixel in the encoding target frame by a distance equivalent to the displacement indicated by the motion vector. Dispersion and absolute values of difference values to be encoded during the motion compensated prediction are smaller than dispersion and absolute values of the pixel values of the pixels in the encoding target frame. Thus, the motion compensated prediction allows a moving image to be encoded with use of a small amount of encoded data as compared to a case in which the pixel values of the encoding target frame themselves are encoded.

Use of the above-mentioned motion compensated prediction makes it possible to efficiently avoid time redundancy in encoding a moving image which redundancy is caused by, e.g., a parallel movement of an object, or a pan or tilt of a camera. However, even the use of the motion compensated prediction does not enable compensation for a temporal luminance variation. The use of the motion compensated prediction, for example, does not enable compensation for a luminance variation between frames, the luminance variation occurring due to, for example, a fade for a scene change, or variation in luminance of an object which variation arises from variation in lighting conditions.

An example known method for compensating for a luminance variation between frames is a method disclosed in Patent Literature 1. According to the method disclosed in Patent Literature 1, a luminance variation between frames is represented by two parameters, namely a luminance variation parameter and a contrast variation parameter. A pixel value of each pixel in a reference frame is then corrected with use of the parameters so that the luminance variation between frames is compensated. In a case of, for example, a fade for a scene change, an amount of such a luminance variation is constant at each position in a frame. Thus, the method of Patent Literature 1 enables accurate compensation for a luminance variation in this case, and consequently enables encoding of a moving image with use of a smaller amount of encoded data.

Citation list

Patent Literature 1
Japanese Patent Application Publication, Tokukaihei, No. 10-136385 A (Publication Date: May 22, 1998)
Non Patent Literature 1
ITU-T Recommendation H.264 (issued in March, 2005)

Summary of Invention

However, local luminance variations (e.g., luminance variations occurring due to temporal variation of lighting conditions) between frames differ in rate according to a position, an orientation, and/or a property of the object. Thus, the method disclosed in Patent Literature 1, which is intended to compensate the global luminance variation, unfortunately fails to accurately compensate such local luminance variations.

Local luminance variations may be compensated in accordance with the following method, for example: An encoding target frame is segmented into a plurality of blocks. A parameter representing a luminance variation for each block is then determined for use in compensation for the luminance variation. The parameter representing the luminance variation for each block may, for example, be an amount of variation in average luminance for the block, or a rate of variation in average luminance for the block.

In the above case, a higher accuracy in parameter representing a luminance variation for each block enables more accurate compensation for the luminance variation. However, a high accuracy in parameter unfortunately requires an increase in an amount of encoded data which amount is necessary to encode such a parameter as additional information. In a case where the parameter is encoded with use of a small amount of encoded data, the accuracy in parameter is then problematically insufficient, thus preventing accurate compensation for the luminance variation.

The present invention has been accomplished in view of the above problem. It is an object of the present invention to provide a moving image encoder and a moving image decoder each of which can compensate local luminance variations between frames while preventing an amount of encoded data from increasing due to additional information.

In order to solve the above problem, a moving image encoder of the present invention is for preparing encoded data by encoding, for each block, a prediction residual indicative of a difference between a target image to be encoded and a first motion compensated image, the target image corresponding to each of frames which constitute a moving image, the moving image encoder, including: correcting means for (i) estimating an amount of variation in luminance of each pixel in a target block, which is currently subjected to encoding, in accordance with (a) a first pixel value of a pixel in a target block surrounding area in a local decoded image obtained by decoding the encoded data, the target block surrounding area being adjacent to the target block and (b) a second pixel value of a pixel in a reference block surrounding area in a reference image, on a basis of which reference image a motion compensated prediction is carried out, the reference block surrounding area being adjacent to a reference block corresponding to the target block, and (ii) correcting the first motion compensated image so as to compensate the amount of variation in luminance thus estimated.

The above arrangement enables compensation for local luminance variations between frames while preventing an amount of encoded data from increasing due to additional information or, even if such an increase occurs, minimizing the increase.

A reference block corresponding to a target block means, for example, that the reference block is located at a position in a reference image (reference frame) which position coincides with a position in a local decoded image (target frame) at which position the corresponding target block is located.

The moving image encoder of the present invention may preferably be arranged such that the target block surrounding area is at least one of (i) a first area in the local decoded image which first area is adjacent to an upper side of the target block and (ii) a second area in the local decoded image which second area is adjacent to a left side of the target block; and the reference block surrounding area is at least one of (i) a third area in the reference image which third area is adjacent to an upper side of the reference block and (ii) a fourth area in the reference image which fourth area is adjacent to a left side of the reference block.

The moving image encoder of the present invention may preferably be arranged such that the target block surrounding area is at least one of (i) a first area in the local decoded image which has been subjected to a low pass filter which first area is adjacent to an upper side of the target block and (ii) a second area in the local decoded image which has been subjected to a low pass filter which second area is adjacent to a left side of the target block; and the reference block surrounding area is at least one of (i) a third area in the reference image which has been subjected to a low pass filter which third area is adjacent to an upper side of the reference block and (ii) a fourth area in the reference image which has been subjected to a low pass filter which fourth area is adjacent to a left side of the reference block.

The moving image encoder of the present invention may preferably be arranged such that the target block surrounding area is at least one of (i) a first area in the local decoded image which has been subjected to a noise elimination filter which first area is adjacent to an upper side of the target block and (ii) a second area in the local decoded image which has been subjected to a noise elimination filter which second area is adjacent to a left side of the target block; and the reference block surrounding area is at least one of (i) a third area in the reference image which has been subjected to a noise elimination filter which third area is adjacent to an upper side of the reference block and (ii) a fourth area in the reference image which has been subjected to a noise elimination filter which fourth area is adjacent to a left side of the reference block.

The moving image encoder of the present invention may preferably be arranged such that the correcting means estimates the amount of variation in luminance by finding a difference between (i) a first pixel value of a first pixel in the target block surrounding area and (ii) a second pixel value of a second pixel in the reference block surrounding area, the second pixel corresponding to the first pixel.

The moving image encoder of the present invention may preferably be arranged such that the correcting means estimates the amount of variation in luminance of said each pixel in the target block in accordance with at least one of a first difference value and a second difference value, the first difference value indicating a difference between (i) a pixel value of a first pixel in the target block surrounding area which first pixel is located above said each pixel and (ii) a pixel value of a first pixel in the reference block surrounding area which first pixel is located above a reference pixel in the reference image, the reference pixel corresponding to said each pixel, the second difference value indicating a difference between (i) a pixel value of a second pixel in the target block surrounding area which second pixel is located on a left of said each pixel and (ii) a pixel value of a second pixel in the reference block surrounding area which second pixel is located on a left of the reference pixel.

The moving image encoder of the present invention may preferably be arranged such that the correcting means estimates the amount of variation in luminance of each pixel in the target block, by weighting the first difference value and the second difference value in accordance with (i) a distance between said each pixel and the first pixel and (ii) a distance between said each pixel and the second pixel so that weighted average is carried out with respect to the first difference value and the second difference value.

The moving image encoder of the present invention may preferably be arranged such that the amount of variation in luminance, estimated with respect to said each pixel in the target block, is corrected by the correcting means so as to be smaller as said each pixel is farther away from an upper side or left side of the target block.

The moving image encoder of the present invention may preferably further include determining means for determining which of (i) the first motion compensated image and (ii) a second motion compensated image corrected by the correcting means is suited for a predicted image, the moving image encoder (i) encoding a prediction residual indicative of a difference between the target image to be encoded and one of the first and second motion compensated images which has been determined by the determining means to be suited for the predicted image and (ii) adding a result determined by the determining means to the encoded data.

The moving image encoder of the present invention may preferably be arranged such that the correcting means selects one out of at least two correction methods each for correcting the first motion compensated image; and the moving image encoder adds, to the encoded data, information indicative of the one out of at least two correction methods selected by the correcting means.

The moving image encoder of the present invention may preferably further include determining means for determining which of (i) the first motion compensated image and (ii) a second motion compensated image corrected by the correcting means is suited for a predicted image, the moving image encoder adding, to the encoded data, information indicative of the one out of at least two correction methods selected by the correcting means, only in a case where the determining means has determined that the second motion compensated image is suited for the predicted image.

In order to solve the above problem, a moving image decoder of the present invention is a moving image decoder for decoding encoded data prepared by encoding, for each block, a prediction residual indicative of a difference between a target image to be encoded and a first motion compensated image, the target image corresponding to each of frames which constitute a moving image, said moving image encoder, including: correcting means for (i) estimating an amount of variation in luminance of each pixel in a target block, which is currently subjected to decoding, in accordance with (a) a first pixel value of a pixel in a target block surrounding area in a decoded image obtained by decoding the encoded data, the target block surrounding area being adjacent to the target block and (b) a second pixel value of a pixel in a reference block surrounding area in a reference image, on a basis of which reference image a motion compensated prediction is carried out, the reference block surrounding area being adjacent to a reference block corresponding to the target block, and (ii) correcting the first motion compensated image so as to compensate the amount of variation in luminance thus estimated.

The above arrangement enables decoding of encoded data encoded by the moving image encoder.

Additional objects, features, and strengths of the present invention will be made clear by the description below. Further, the advantages of the present invention will be evident from the following explanation in reference to the drawings.

Brief Description of Drawings

Fig. 1

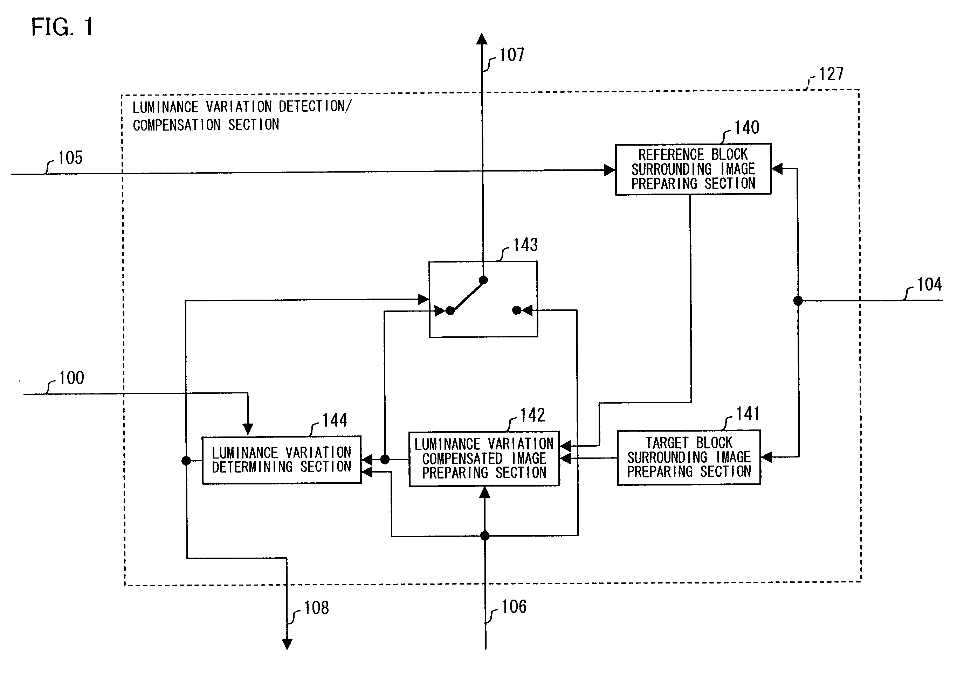

Fig. 1 is a block diagram illustrating an arrangement of a luminance variation detection/ compensation section in accordance with a first embodiment of the present invention.

Fig. 2

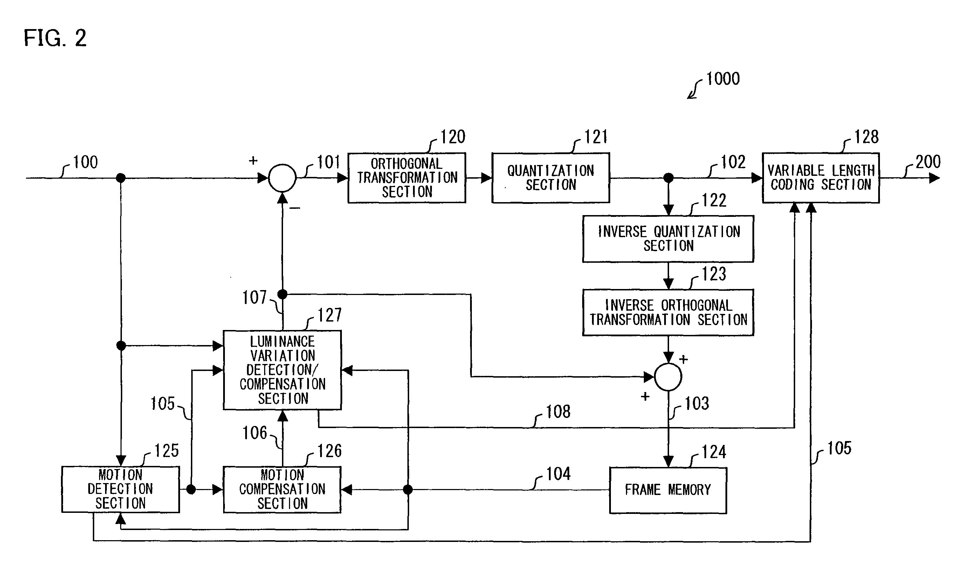

Fig. 2 is a block diagram illustrating an arrangement of a moving image encoder in accordance with the first embodiment of the present invention.

Fig. 3

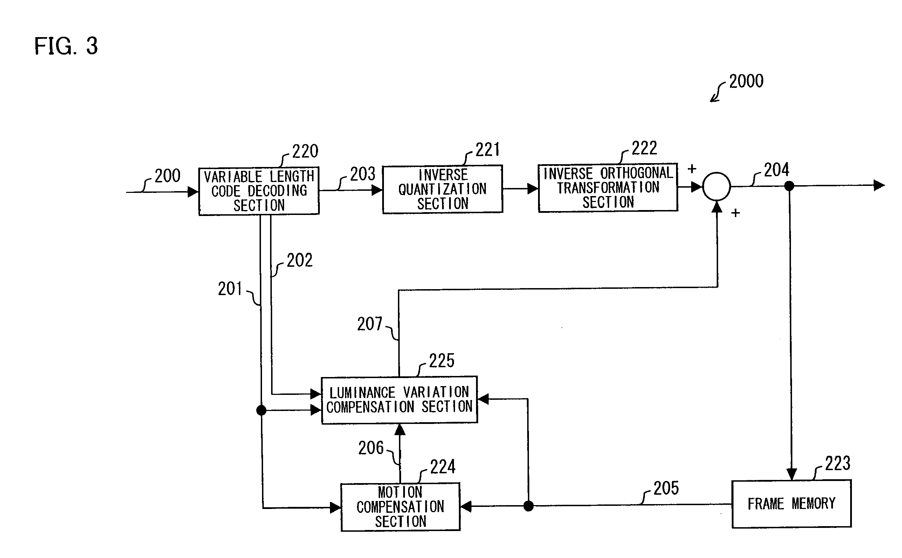

Fig. 3 is a block diagram illustrating an arrangement of a moving image decoder in accordance with the first embodiment of the present invention.

Fig. 4

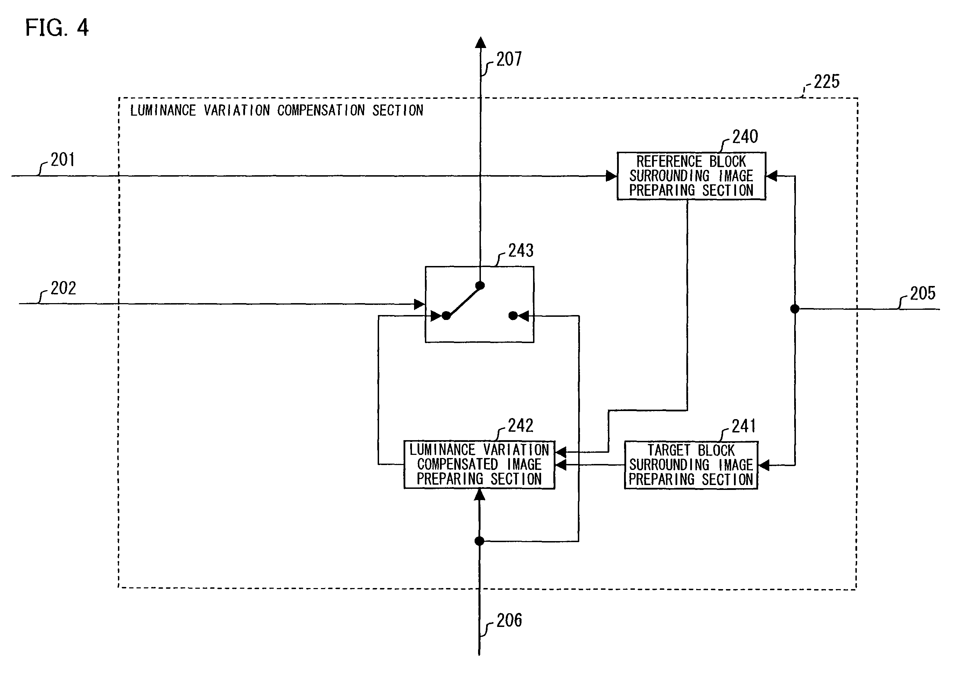

Fig. 4 is a block diagram illustrating an arrangement of a luminance variation compensation section in accordance with the first embodiment of the present invention.

Fig. 5

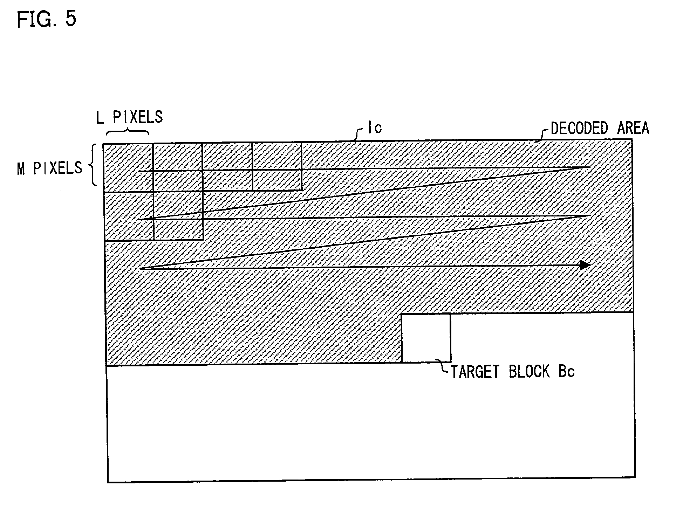

Fig. 5 is a diagram illustrating an order of block-by-block processing of a moving image in accordance with an embodiment of the present invention.

Fig. 6

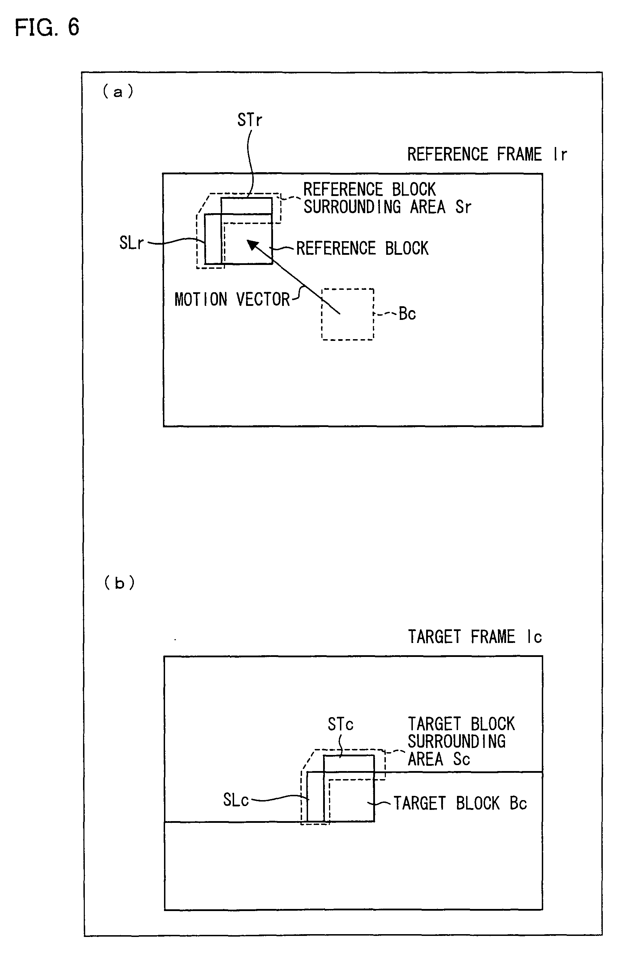

Fig. 6 is a diagram illustrating a reference block surrounding area and a target block surrounding area in accordance with an embodiment of the present invention.

Fig. 7

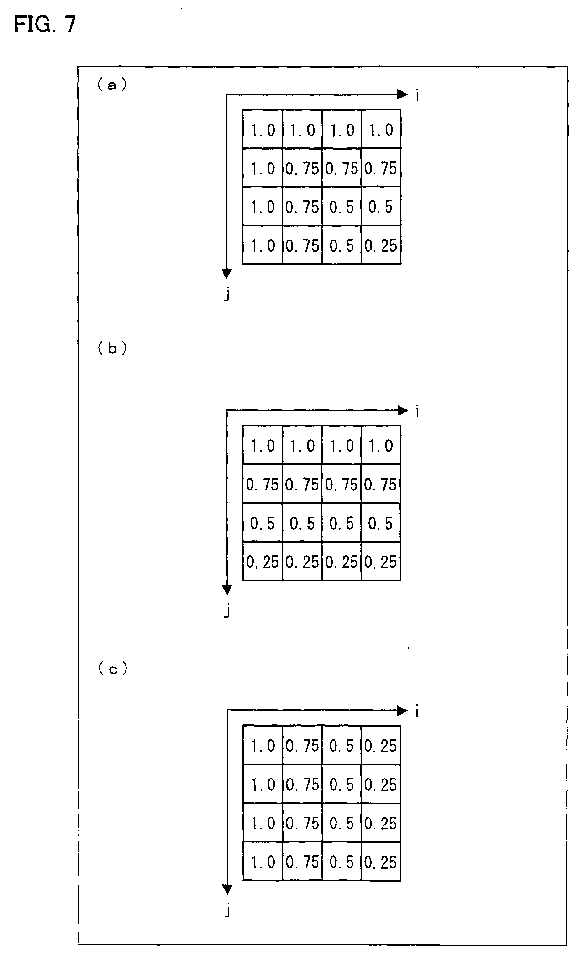

Fig. 7 is a diagram for an embodiment of the present invention, the diagram illustrating coefficients used to correct a luminance variation estimate amount in correspondence with distances between a position in a block and an upper side or left side of the block.

Fig. 8

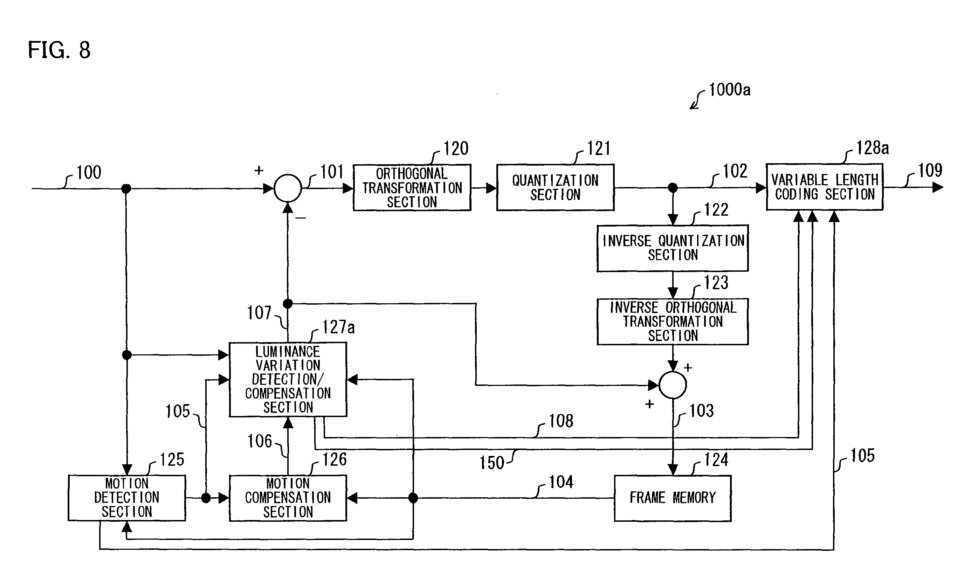

Fig. 8 is a block diagram illustrating an arrangement of a moving image encoder in accordance with a second embodiment of the present invention.

Fig. 9

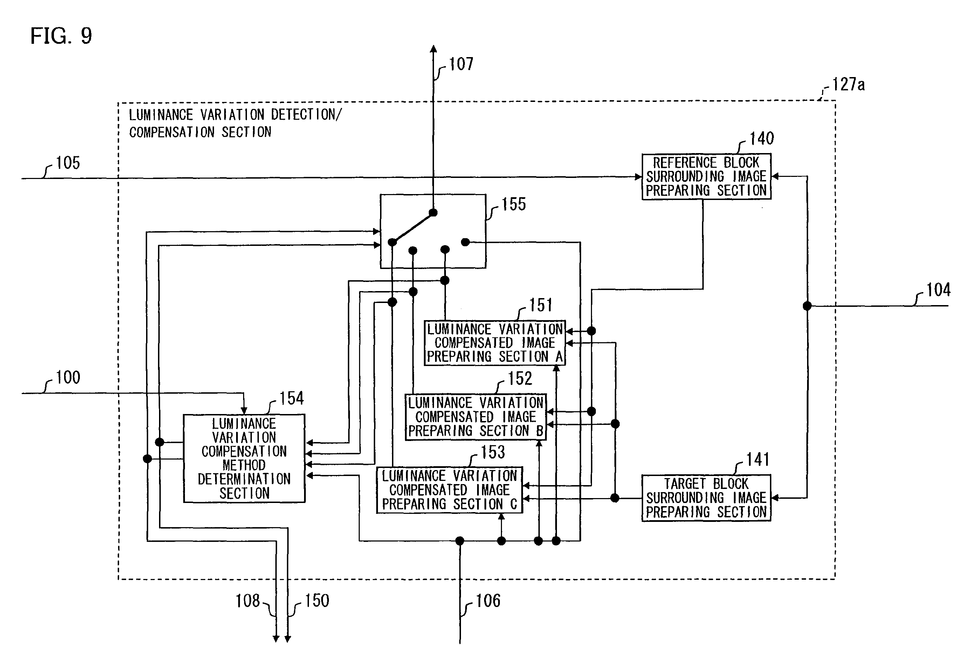

Fig. 9 is a block diagram illustrating an arrangement of a luminance variation detection/compensation section in accordance with the second embodiment of the present invention.

Fig. 10

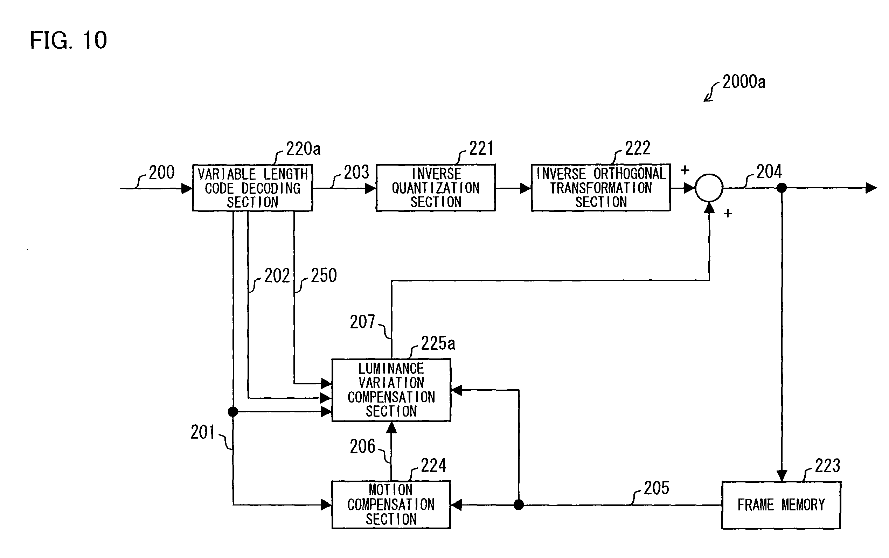

Fig. 10 is a block diagram illustrating an arrangement of a moving image decoder in accordance with the second embodiment of the present invention.

Fig. 11

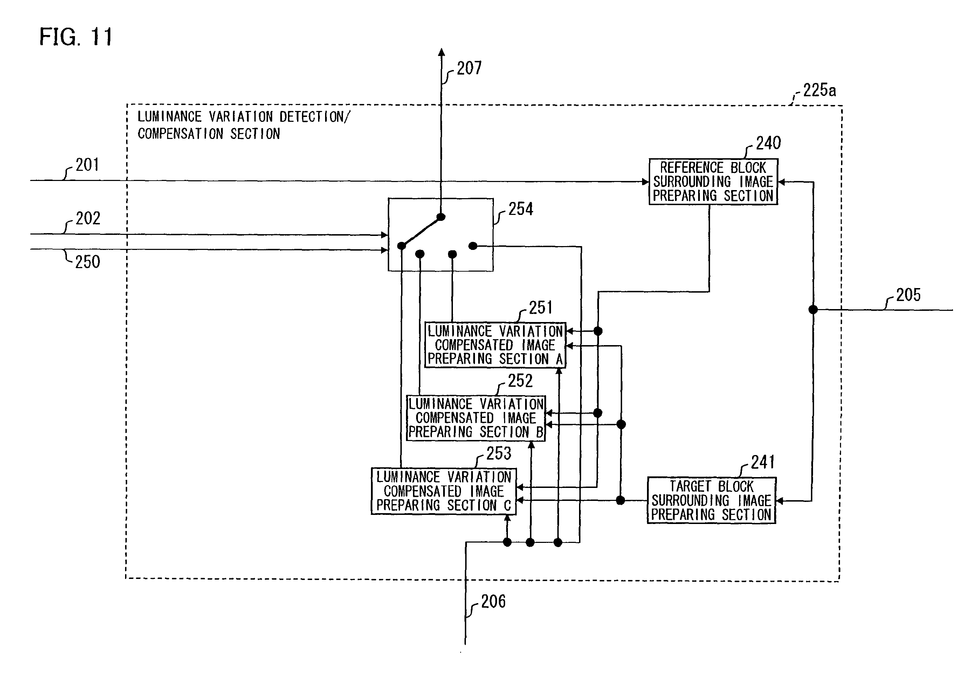

Fig. 11 is a block diagram illustrating an arrangement of a luminance variation compensation section in accordance with the second embodiment of the present invention.

Reference Signs List

| | |
|---|---|
| 100 | input image |
| 101 | prediction residual |
| 102, 203 | transformation coefficient level |
| 103, 104 | local decoded image |
| 204, 205 | local decoded image |
| 105, 201 | motion vector |
| 106, 206 | motion compensated image |
| 107, 207 | predicted image |
| 108, 202 | luminance variation detection information |
| 200 | encoded data |
| 120 | orthogonal transformation section |
| 121 | quantization section |
| 122, 221 | inverse quantization section |
| 123, 222 | inverse orthogonal transformation section |
| 124, 223 | frame memory |
| 125 | motion detection section |
| 126, 224 | motion compensation section |
| 127, 127a | luminance variation detection/compensation section |
| 128, 128a | variable length coding section |
| 140, 240 | reference block surrounding image preparing section |
| 141, 241 | target block surrounding image preparing section |
| 142, 242 | luminance variation compensated image preparing section |
| 143, 243 | predicted image selecting switch |
| 144 | luminance variation determining section |
| 150, 250 | luminance variation compensation method information |
| 151, 251 | luminance variation compensated image preparing section A |
| 152, 252 | luminance variation compensated image preparing section B |
| 153, 253 | luminance variation compensated image preparing section C |
| 154 | luminance variation compensation method determination section |
| 155, 254 | predicted image selecting switch |
| 220, 220a | variable length code decoding section |
| 225, 225a | luminance variation compensation section |
| 1000, 1000a | moving image encoder |
| 2000, 2000a | moving image decoder |

Description of Embodiments

[Embodiment 1]

With reference to Figs. 1 through 7, the following description deals with moving image encoder and moving image decoder of a first embodiment in accordance with the present invention.

It is assumed in the present embodiment and a second embodiment (later described) that (i) a moving image is constituted by a plurality of frames and (ii) the moving image encoder and the moving image decoder carry out respective processes with respect to the plurality of frames in a predetermined order (e.g., in an order in which the plurality of frames are displayed). It is also assumed that, out of the plurality of frames which constitute the moving image, (i) a frame to be encoded or decoded is referred to as "target frame Ic" and (ii) a frame (e.g., a frame which is one frame before the target frame in the predetermined order) to be referred to during a motion compensated prediction is referred to as "reference frame Ir." The reference frame Ir is a decoded frame stored in a frame memory.

It is further assumed in the present embodiment and the second embodiment that each of the moving image encoder and the moving image decoder (i) divides a target frame Ic into a plurality of blocks each having a predetermined size, and then (ii) carries out the process with respect to the plurality of blocks in a predetermined order. It is assumed that, out of the plurality of blocks which constitute the target frame Ic, a block to be encoded or decoded is referred to as "target block Bc. Note, for simplicity, that the description below assumes that the plurality of blocks are processed in a raster scan order in which the process starts from a block at an upper left corner (see Fig. 5). Note also that each of the blocks has a size of L $\times$ M pixels.

Note, in the target frame Ic, that an area where blocks, which have already been encoded or decoded when the target block Bc is being encoded or decoded, are located is referred to as "encoded area" or "decoded area", respectively. Fig. 5 indicates a decoded area by a hatched area.

It is assumed in the target frame Ic that (i) a pixel located at the upper left corner of the frame corresponds to an origin of X-Y coordinate, (ii) a pixel located at position coordinates (X, Y) is indicated by "IC(X, Y)," and (iii) its pixel value is indicated by "Ic(X, Y)." Similarly, it is assumed in the reference frame Ir, a pixel located at position coordinates (X, Y) is indicated by "IR(X, Y)," and its pixel value is indicated by "Ir(X, Y)."

<Moving Image Encoder (Encoder)>

The following description deals with an arrangement of a moving image encoder 1000 of the present embodiment with reference to Fig. 2. Fig. 2 is a block diagram illustrating the arrangement of the moving image encoder 1000.

As illustrated in Fig. 2, the moving image encoder 1000 includes: an orthogonal transformation section 120; a quantization section 121; an inverse quantization section 122; an inverse orthogonal transformation section 123; a frame memory 124; a motion detection section 125; a motion compensation section 126; a luminance variation detection/ compensation section 127; and a variable length coding section 128.

The moving image encoder 1000 encodes a target frame Ic block by block. Specifically, in the moving image encoder 1000, a prediction residual 101 (L $\times$ M pixels) which corresponds to a difference between the input image 100 and a predicted image 107 (L $\times$ M pixels) is encoded by the orthogonal transformation section 120, the quantization section 121, and the variable length coding section 128. This causes encoded data 200 to be obtained. Note that the input image 100 (L $\times$ M pixels) corresponds to each of the target blocks Bc of the target frame Ic. The predicted image 107 corresponding to the input image 100 is supplied from the luminance variation detection/compensation section 127 as later described.

The orthogonal transformation section 120 carries out discrete cosine transform (DCT) which causes the prediction residual 101, which is image data in space domain, to be transformed into image data in frequency domain. Frequency component coefficients (DCT coefficients), transformed by the orthogonal transformation section 120, are supplied to the quantization section 121.

The quantization section 121 quantizes the frequency component coefficients transformed by the orthogonal transformation section 120. Transformation coefficient levels 102 (i.e., a set of representative quantized values obtained by the quantization of the respective frequency component coefficients) quantized by the quantization section 121 are supplied to the variable length coding section 128 and the inverse quantization section 122.

The inverse quantization section 122 carries out inverse quantization with respect to the transformation coefficient levels 102, quantized by the quantization section 121. This causes restoration of the frequency component coefficients transformed by the orthogonal transformation section 120. The frequency component coefficients restored by the inverse quantization section 122 are supplied to the inverse orthogonal transformation section 123.

The inverse orthogonal transformation section 123 carries out inverse discrete cosine transform with respect to the frequency component coefficients restored by the inverse quantization section 122. This causes restoration of the prediction residual 101 (L $\times$ M pixels) which has been supplied to the orthogonal transformation section 120.

The moving image encoder 1000 adds the prediction residual, restored by the inverse orthogonal transformation section 123, to the predicted image 107, supplied from the luminance variation detection/compensation section 127. This causes a local decoded image 103 to be prepared. The local decoded image 103 (L $\times$ M pixels) thus prepared is stored in the frame memory 124.

The frame memory 124 sequentially stores local decoded images 103 prepared for the respective blocks. During processing of a certain target block Bc of the target frame Ic, the frame memory 124 stores not only local decoded images (hereinafter referred to also as "reference images") in a reference frame Ir, but also local decoded images (hereinafter referred to also as "decoded original images") in a decoded area of the target frame Ic.

The motion detection section 125 finds a motion vector 105 for use in a motion compensated prediction, by comparing the input image 100 with a reference image (i.e., a local decoded image in the reference frame Ir) stored in the frame memory 124. The motion vector 105 found by the motion detection section 125 is supplied to the luminance variation detection/ compensation section 127 and the variable length coding section 128.

The motion compensation section 126 prepares a motion compensated image 106 (L × M pixels) corresponding to the input image 100, on the basis of (i) the motion vector 105 found by the motion detection section 125 and (ii) the reference image stored in the frame memory 124. The motion compensated image 106 prepared by the motion compensation section 126 is supplied to the luminance variation detection/compensation section 127.

The luminance variation detection/compensation section 127 detects a luminance variation between frames in accordance with the decoded original image and the reference image which are stored in the frame memory 124. A detected luminance variation is supplied, as luminance variation detection information 108, to the variable length coding section 128. The luminance variation detection/compensation section 127 also corrects the motion compensated image 106 in accordance with the luminance variation detection information 108 so as to compensate the luminance variation. The above-mentioned predicted image 107 is intended to be the motion compensated image which has been corrected by the luminance variation detection/compensation section 127.

Note that the luminance variation detection/compensation section 127 is a significant feature of the present invention, and is therefore later described in more detail with reference to other drawings.

The variable length coding section 128 encodes the transformation coefficient levels 102, the motion vector 105, and the luminance variation detection information 108 so as to obtain their respective pieces of encoded data. The variable length coding section 128 also carries out multiplexing with respect to the pieces of encoded data so as to prepare encoded data 200. The encoded data 200 prepared by the variable length coding section 128 is supplied to the outside.

<Luminance Variation Detection/Compensation Section>

The following description deals in detail with the luminance variation detection/compensation section 127 of the above-described moving image encoder 1000 with reference to Figs. 1 and 6. Fig. 1 is a block diagram illustrating an example arrangement of the luminance variation detection/compensation section 127. Fig. 6 shows how a target block Bc, a target block surrounding area Sc, a reference block Br, and a reference block surrounding area Sr are arranged.

As illustrated in Fig. 1, the luminance variation detection/compensation section 127 includes: a reference block surrounding image preparing section 140; a target block surrounding image preparing section 141; a luminance variation compensated image preparing section 142; a predicted image selecting switch 143; and a luminance variation determining section 144. These constituents of the luminance variation detection/compensation section 127 are described one by one.

The reference block surrounding image preparing section 140 reads from the frame memory 124 a pixel value of each pixel in the reference block surrounding area Sr of a reference image, in accordance with a motion vector 105 found by the motion detection section 125. Then, the reference block surrounding image preparing section 140 supplies, as a reference block surrounding image, the pixel values to the luminance variation compensated image preparing section 142.

The reference block surrounding area Sr refers to an area around the reference block Br, which area is referred to during the motion compensated prediction. According to the present embodiment, the reference block surrounding area Sr is an area corresponding to a sum of sets (Sr = STr U SLr), where (i) STr indicates a rectangular area (L × 1 pixels) adjacent to an upper side of the reference block Br and (ii) SLr indicates a rectangular area (1 × M pixels) adjacent to a left side of the reference block Br (see (a) of Fig. 6).

The pixel values of the respective pixels in the reference block surrounding image, i.e., (i) a pixel value STr(i, j) of a pixel in the rectangular area STr and a pixel value SLr(i, j) of a pixel in the rectangular area SLr, is determined by the following Formula (1):

$$STr(i,0) = Ir(Xr + i, Yr - 1) \quad (i = 0...L - 1)$$
$$SLr(0,j) = Ir(Xr - 1, Yr + j) \quad (j = 0...M - 1) \qquad ...(1)$$

In Formula (1), (Xr, Yr) represents coordinates (Xr, Yr) of a pixel located at an upper left corner of the reference block Br in the reference frame Ir. The (Xr, Yr) is defined by the following Formula (2) with the use of (i) coordinates (Xc, Yc) of a pixel located at an upper left corner of the target block Bc in the target frame Ic and (ii) a displacement (dX, dY) indicated by the motion vector 105:

$$Xr = Xc + dX \atop Yr = Yc + dY \qquad \Bigg\} \qquad \dots(2)$$

The target block surrounding image preparing section 141 reads from the frame memory 124 the pixel values of the respective pixels in the target block surrounding area Sc in the decoded original image. Then, the target block surrounding image preparing section 141 supplies, as the target block surrounding image, the pixel values to the luminance variation compensated image preparing section 142.

The target block surrounding area Sc refers to an area around the target block Bc in the target frame Ic. According to the present embodiment, the target block surrounding area Sc is an area corresponding to a sum of sets Sc = STc U SLc, where (i) STc indicates a rectangular area (L $\times$ 1 pixels) adjacent to an upper side of the target block Bc and (ii) SLc indicates a rectangular area (1 $\times$ M pixels) adjacent to a left side of the target block Bc (see (b) of Fig. 6).

The pixel values of the respective pixels in the target block surrounding image, i.e., (i) a pixel value STc(i, j) of a pixel in the rectangular area STc and a pixel value SLc(i, j) of a pixel in the rectangular area SLc, is determined by the following Formula (3):

$$STc(i,0) = Ic(Xc+i, Yc-1) \qquad (i = 0 \dots L-1)$$
$$SLc(0,j) = Ic(Xc-1, Yc+j) \qquad (j = 0 \dots M-1) \qquad \dots(3)$$

In Formula (3), (Xr, Yr) represents coordinates (Xr, Yr) of a pixel located at the upper left corner of the reference block Br in the reference frame Ir. The (Xr, Yr) is defined by Formula (2) as mentioned above. The target block surrounding area Sc is preferably congruent with the reference block surrounding area Sr as described above. The target block surrounding area is, however, not necessarily limited to this.

The luminance variation compensated image preparing section 142 finds a luminance variation estimate amount O(i, j) on the basis of the reference block surrounding image and the target block surrounding image. Then, the luminance variation compensated image preparing section 142 corrects, in accordance with the luminance variation estimate amount O(i, j), a motion compensated image 106 so as to compensate a luminance variation between frames. The motion compensated image 106 thus corrected is supplied, as a luminance variation compensated image, to the predicted image selecting switch 143 and the luminance variation determining section 144.

A luminance variation compensated image is intended to be an image (L $\times$ M pixels) obtained by correcting a motion compensated image 106 so as to compensate a luminance variation between frames. A pixel value P(i, j) of a pixel in the luminance variation compensated image is found from, for example, Formula (4) below on the basis of (i) a pixel value R(i, j) of a pixel in the motion compensated image 106 and (ii) a luminance variation estimate amount O(i, j) for the pixel. The coordinates (i, j) are of a pixel as represented on the assumption that a pixel located at the upper left corner of the target block is an origin. In other words, the coordinates are of a pixel in the block.

$$P(i,j) = R(i,j) + O(i,j) \ (i = 0 \dots L\text{-}1, \ j = 0 \dots M\text{-}1) \qquad \dots(4)$$

The pixel value R(i, j) of the pixel located at the coordinates (i, j) in the motion compensated image 106 is defined by the following Formula (5):

$$R(i,j) = Ir(Xr+i, Yr+j) \quad (i = 0 \dots L\text{-}1, \ j = 0 \dots M\text{-}1) \dots(5)$$

The luminance variation estimate value O(i, j) for the coordinates (i, j) represents an estimated amount (luminance variation estimate amount) of a luminance variation between frames. The luminance variation estimate value O(i, j) can be found from, for example, Formula (6) below on the basis of the reference block surrounding image and the target block surrounding image.

$$O(i,j) = \frac{1}{L+M}\left[\sum_{p=0}^{p<L}\{STc(p,0)-STr(p,0)\} + \sum_{q=0}^{q<M}\{SLc(0,q)-SLr(0,q)\}\right] \qquad (i=0...L\text{-}1,\ j=0...M\text{-}1)$$

$$...(6)$$

According to the O(i, j) defined by Formula (6), an average value of a difference image between the reference block surrounding image and the target block surrounding image is set as a luminance variation estimate amount between frames. Thus, the use of O(i, j) found from Formula (6) allows a compensation, block by block, for a luminance variation between frames.

O(i, j) is not necessarily found from Formula (6). The luminance variation estimate value O(i, j) can also be found from the following Formula (7), for example:

$$O(i,j) = STc(i,0) - STr(i,0) \qquad (i=0...L\text{-}1,\ j=0...M\text{-}1) \qquad ...(7)$$

According to Formula (7), O(i, j), an amount corresponding to a variation in pixel value of a pixel in the target block surrounding area is set as a luminance variation estimate amount between frames, which pixel is located directly to the upper side of a pixel IC(Xc+i, Yc+j) located in the target block. The use of O(i, j) found from Formula (7) allows a compensation, column by column in each block, for a luminance variation. This allows a more accurate compensation for a luminance variation between frames, as compared to the case in which O(i, j) is found from Formula (6).

Alternatively, O(i, j) can be found from the following Formula (8):

$$O(i,j) = SLc(0,j) - SLr(0,j) \qquad (i=0...L\text{-}1,\ j=0...M\text{-}1) \qquad ...(8)$$

According to Formula (8), O(i, j), an amount corresponding to a variation in pixel value of a pixel in the target block surrounding area is set as a luminance variation estimate amount between frames, which pixel is located directly to the left of a pixel IC(Xc+i, Yc+j) located in the target block. The use of O(i, j) found from Formula (8) allows a compensation, row by row in each block, for a luminance variation, This allows a more accurate compensation for a luminance variation between frames, as in the case of using O(i, j) found from Formula (7).

Alternatively, O(i, j) can be found from the following Formula (9):

$$O(i,j) = W_{i,j} \times \{STc(i,0)-STr(i,0)\} + (1-W_{i,j}) \times \{SLc(0,j)-SLr(0,j)\} \qquad (i=0...L\text{-}1,\ j=0...M\text{-}1),$$

$$where\ W_{i,j} = \frac{j+1}{i+j+2}$$

$$...(9)$$

According to Formula (9), O(i, j), a value obtained by weighted averaging of amounts corresponding to variations in pixel value of pixels in the target block surrounding area is set as a luminance variation estimate amount between frames, which pixels are respectively located directly to the upper side of and to the left of a pixel IC(Xc+i, Yc+j) located in the target block. The weighting is carried out in correspondence with distances by which the two pixels in the target block surrounding area are respectively separated from the pixel IC(Xc+i, Yc+j) in the target block. The use of O(i, j) found from Formula (9) allows a compensation, pixel by pixel, for a luminance variation. This allows a more accurate compensation for a luminance variation between frames.

O(i, j) can also be found from the following Formula (10):

$$O(i,j) = \left[ W'_{i,j} \times \{STc(i,0) - STr(i,0)\} + (2^N - W'_{i,j}) \times \{SLc(0,j) - SLr(0,j)\} + 2^{N-1} \right] \div 2^N \quad (i = 0 \ldots L\text{-}1, \quad j = 0 \ldots M\text{-}1),$$

$$\text{where } W'_{i,j} = \left\lfloor \frac{j+1}{i+j+2} \times 2^N + 2^{N-1} \right\rfloor$$

$$\ldots (10)$$

According to Formula (10), as in Formula (9), O(i, j), a value obtained by weighted averaging of amounts corresponding to variations in pixel value of pixels in the target block surrounding area is set as a luminance variation estimate amount between frames, which pixels are respectively located directly to the upper side of and to the left of a pixel IC(Xc+i, Yc+j) located in the target block. A weighting factor W'i,j in Formula (10) is an integer. Thus, calculations involving decimals are not necessary to determine the luminance variation estimate value O(i, j). Thus, the use of Formula (11) allows a rapid derivation of the luminance variation estimate value O(i, j) on a computer.

Further alternatively, O(i, j) can be found from the following Formula (11):

$$O(i,j) = 0.5 \times \{STc(i,0) - STr(i,0)\} + 0.5 \times \{SLc(0,j) - SLr(0,j)\} \quad (i = 0 \ldots L\text{-}1, \quad j = 0 \ldots M\text{-}1)$$

$$\ldots (11)$$

According to Formula (11), O(i, j), a simple average value of amounts corresponding to variations in pixel value of pixels in the target block surrounding area is set as a luminance variation estimate amount between frames, which pixels are respectively located directly to the upper side of and to the left of a pixel IC(Xc+i, Yc+j) located in the target block. The use of O(i, j) found from Formula (11) allows a luminance variation between frames to be compensated on the basis of luminance variations for two positions. Thus, the compensation is not easily affected by a noise. Further, the finding of the O(i, j) by use of Formula (11) requires a smaller amount of operations than that by use of Formula (9).

The luminance variation determining section 144 compares each of the luminance variation compensated image and the motion compensated image 106 with an input image 100 so as to determine which one of the luminance variation compensated image and the motion compensated image is suitable for a predicted image. Then, the luminance variation determining section 144 supplies luminance variation detection information 108 indicative of a determined result to the variable length coding section 128 and the predicted image selecting switch 143.

The determination of an image suitable for a predicted image can be carried out in accordance with the following method, for example: First, a sum of absolute differences (SAD) between the luminance variation compensated image and the input image 100 is found to give SAD 1. Note that the SAD refers to a value obtained by adding up a difference, in pixel value between first and second pixels of respective congruent first and second images which first and second pixels are located so as to correspond to each other, for the entire pixels of the first and second images. Second, a SAD between the motion compensated image 106 and the input image 100 is found to give SAD2. Finally, the luminance variation determining section 144 determines, in a case where SAD1 ≤ SAD2, that the luminance variation compensated image is suitable for a predicted image. Otherwise (where SAD1 > SAD2), the luminance variation determining section determines that the motion compensated image 106 is suitable for a predicted image.

The predicted image selecting switch 143 selects one of the luminance variation compensated image and the motion compensated image 106 in accordance with the luminance variation detection information 108. Then, the predicted image selecting switch 143 outputs a selected image as a predicted image 107.

The description of the luminance variation detection/compensation section 127 ends here. As described above, the luminance variation detection/compensation section 127 finds the predicted image 107 and the luminance variation detection information 108 in accordance with supplied data, i.e., the motion compensated image 106, local decoded images 104 (i.e., a reference image and a decoded original image), the motion vector 105, and the input image 100. Then, the luminance variation detection/compensation section 127 outputs the predicted image and the luminance variation detection information.

The description of the moving image encoder 1000 ends here. As described above, the moving image encoder 1000 carries out encoding with use of a predicted image in which a luminance variation between frames are compensated block by block. This enables a moving image having a local luminance variation between frames to be encoded with use of a small coding amount. In addition, each block merely requires additional information of at most 1 bit. Thus, a smaller coding amount is required for the additional information, as compared to a case where a luminance variation is represented by parameters.

<Moving Image Decoder (Decoder)>

With reference to Fig. 3, the following description deals with a moving image decoder 2000 for decoding the encoded data 200, which has been encoded by the moving image encoder 1000 illustrated in Fig. 2. Fig. 3 is a block diagram illustrating an arrangement of the moving image decoder 2000.

As illustrated in Fig. 3, the moving image decoder 2000 includes: a variable length code decoding section 220; an inverse quantization section 221; an inverse orthogonal transformation section 222; a frame memory 223; a motion compensation section 224; and a luminance variation compensation section 225. The encoded data 200, obtained by encoding each target block Bc in the moving image encoder 1000, is supplied to the variable length code decoding section 220 of the moving image decoder 2000.

The variable length code decoding section 220 decodes the encoded data 200 so as to obtain a motion vector 201, luminance variation detection information 202, and transformation coefficient levels 203. The motion vector 201 is supplied to the motion compensation section 224 and the luminance variation compensation section 225. The luminance variation detection information 202 is supplied to the luminance variation compensation section 225. The transformation coefficient levels 203 are supplied to the inverse quantization section 221.

The inverse quantization section 221 carries out inverse quantization with respect to the transformation coefficient levels 203, obtained by the variable length code decoding section 220, so as to restore the respective frequency component coefficients transformed by the orthogonal transformation section 120 of the moving image encoder 1000. The frequency component coefficients restored by the inverse quantization section 221 are supplied to the inverse orthogonal transformation section 222.

The inverse orthogonal transformation section 222 carries out inverse discrete cosine transform with respect to the frequency component coefficients, restored by the inverse quantization section 122, so as to restore the prediction residual 101 supplied to the orthogonal transformation section 120 of the moving image encoder 1000.

The moving image decoder 2000 adds the prediction residual, restored by the inverse orthogonal transformation section 222, to a predicted image 207 supplied from the luminance variation compensation section 224. This causes a local decoded image 204 to be prepared. The local decoded image 204 thus prepared is stored in the frame memory 223 and is also supplied to the outside.

The motion compensation section 224 prepares a motion compensated image 206 in accordance with the motion vector 201 and a reference image stored in the frame memory 223. The motion compensated image 206 prepared by the motion compensation section 224 is supplied to the luminance variation compensation section 225.

The luminance variation compensation section 225 corrects the motion compensated image 206 in accordance with the motion vector 201, the luminance variation detection information 202, and a decoded original image and the reference image both stored in the frame memory 223. This causes a luminance variation between the frames to be compensated. The above-mentioned predicted image 207 is intended to be the motion compensated image which has been corrected by the luminance variation compensation section 225.

Note that the luminance variation compensation section 225 is a significant feature of the present invention, and is therefore later described in more detail with reference to other drawings.

<Luminance Variation Compensation Section>

The following description deals in detail with the luminance variation compensation section 225 of the moving image decoder 2000 with reference to Fig. 4. Fig. 4 is a block diagram illustrating an example arrangement of the luminance variation compensation section 225.

As illustrated in Fig. 4, the luminance variation compensation section 225 includes: a reference block surrounding image preparing section 240, a target block surrounding image preparing section 241, a luminance variation compensated image preparing section 242, and a predicted image selecting switch 243. These constituents of the luminance variation compensation section 225 are described one by one.

The reference block surrounding image preparing section 240 reads from the frame memory 223 a pixel value of each pixel in a reference block surrounding area Sr of a reference frame Ir, in accordance with the motion vector 201. The reference block surrounding image preparing section 240 supplies, as a reference block surrounding image, the pixel values to the luminance variation compensated image preparing section 242. The reference block surrounding area Sr is identical to the reference block surrounding area Sr referred to in the description of the moving image encoder 1000.

The target block surrounding image preparing section 241 reads from the frame memory 223 a pixel value of each pixel in a target block surrounding area Sc, and supplies, as a target block surrounding image, the pixel values to the luminance variation compensated image preparing section 242. The target block surrounding area Sc is identical to the target block surrounding area Sc referred to in the description of the moving image encoder 1000.

It should be noted that the target block surrounding area Sc is included in a decoded area of the target frame Ic (see (b) of Fig. 6). In other words, the target block surrounding image is a part of a decoded original image stored in the frame memory 223. As such, the target block surrounding image preparing section 241 can read such a part from the frame memory 223.

The luminance variation compensated image preparing section 242 finds a luminance variation estimate amount O(i, j) on the basis of the reference block surrounding image and the target block surrounding image. Then, the luminance variation compensated image preparing section 242 corrects, in accordance with the luminance variation estimate amount O(i, j), the motion compensated image 206 so as to compensate luminance variations between frames. The motion compensated image 206 thus corrected is supplied to the predicted image selecting switch 243 as a luminance variation compensated image.

The motion compensated image 206 is corrected by a method identical to the correction method used in the encoding step which is carried out in the moving image encoder 1000. Details of the method for correcting the motion compensated image 206 are identical to those of the method disclosed in the description of the moving image encoder 1000, and are thus not described here.

The predicted image selecting switch 243 selects one of the luminance variation compensated image and the motion compensated image 206 on the basis of the luminance variation detection information 202. The predicted image selecting switch then outputs the selected image as a predicted image 207.

The description of the luminance variation compensation section 225 ends here. As described above, the luminance variation compensation section 225 prepares the predicted image 207 in accordance with supplied data, i.e., the motion compensated image 206, the local decoded images 205 (i.e., the reference image and the decoded original image), the motion vector 201, and the luminance variation detection information 202. The luminance variation compensation section 225 outputs the predicted image.

The description of the moving image decoder 2000 ends here. As described above, the moving image decoder 2000 allows an image to be decoded in accordance with a predicted image in which a luminance variation between frames has been compensated. The predicted image 207 represents the original image (i.e., the input image supplied to the moving image encoder 1000) more precisely than the predicted image (i.e., the motion compensated image 206) in which no luminance variation has been compensated. Hence, when a playback image is obtained by adding a restored prediction residual to the predicted image in which the luminance variation has been compensated, its original image is reproduced more faithfully.

<Low Pass Filter>

According to the above description of the present embodiment, the pixel values of the respective pixels in the reference/target block surrounding images are directly used as those in reference/target images. However, the present embodiment is not necessarily limited to this.

For example, it is possible to set the pixel values of the respective pixels in the reference/target images which have been subjected to a low pass filter to the pixel values of the respective pixels in the reference/target block surrounding images. In other words, the pixel value of each pixel in the reference block surrounding image can be found by the following Formula (12), and the pixel value of each pixel in the target block surrounding image can be found by the following Formula (13).

$$STr\,(i,0) = \{Ir(Xr + i - 1, Yr - 1) + 2 \times Ir(Xr + i, Yr - 1) + Ir(Xr + i + 1, Yr - 1)\} \div 4 \quad (i = 0...L\text{-}1)$$
$$SLr\,(0,j) = \{Ir(Xr - 1, Yr + j - 1) + 2 \times Ir(Xr - 1, Yr + j) + Ir(Xr - 1, Yr + j + 1)\} \div 4 \quad (j = 0...M\text{-}1)$$

$$\ldots(12)$$

$$STc\,(i,0) = \{Ic(Xc + i - 1, Yc - 1) + 2 \times Ic(Xc + i, Yc - 1) + Ic(Xc + i + 1, Yc - 1)\} \div 4 \quad (i = 0...L\text{-}1)$$
$$SLc(0,j) = \{Ic(Xc - 1, Yc + j - 1) + 2 \times Ic(Xc - 1, Yc + j) + Ic(Xc - 1, Yc + j + 1)\} \div 4 \quad (j = 0...M\text{-}1)$$

$$\ldots(13)$$

According to Formulae (12) and (13), in a reference image or a decoded original image, the pixel values of the respective pixels in the reference/target block surrounding images are set to the pixel values of the pixels, located to the upper side of the reference/target blocks, which have been subjected to the low pass filter in a horizontal direction and are set to the pixel values of the pixels, located to the left of the reference/target blocks, which have been subjected to the low pass filter in a vertical direction.

The use of the low pass filter allows an elimination of variation in high-frequency component of a pixel value of a pixel, between the reference block surrounding image and the target block surrounding image, primarily due to a reason such as appearance, disappearance, or deformation of an object. Hence, it is possible to more accurately compensate a luminance variation between frames, by use of the reference/target block surrounding images which have been subjected to the low pass filter.

There is another specific example of the method for using the low pass filter. According to the specific example, a pixel value of each pixel in a reference block surrounding image can be found by the following Formula (12a) and a pixel value of each pixel in a target block surrounding image can be found by the following Formula (13a).

$$STr\,(i,0) = \left\{ Ir(Xr+i,Yr-2) + 3 \times Ir(Xr+i,Yr-1) \right\} \div 4 \quad (i=0...L\text{-}1)$$
$$SLr\,(0,j) = \left\{ Ir(Xr-2,Yr+j) + 3 \times Ir(Xr-1,Yr+j) \right\} \div 4 \quad (j=0...M\text{-}1)$$

$$...(12a)$$

$$STc\,(i,0) = \left\{ Ic(Xc+i,Yc-2) + 3 \times Ic(Xc+i,Yc-1) \right\} \div 4 \quad (i=0...L\text{-}1)$$
$$SLc(0,j) = \left\{ Ic(Xc-2,Yc+j) + 3 \times Ic(Xc-1,Yc+j) \right\} \div 4 \quad (j=0...M\text{-}1)$$

$$...(13a)$$

According to Formulae (12a) and (13a), in a reference image or a decoded original image, the pixel values of the respective pixels in the reference/target block surrounding images are set to the pixel values of the pixels, located to the upper side of the reference/target blocks, which have been subjected to the low pass filter in a vertical direction and are set to the pixel values of the pixels, located to the left of the reference/target blocks, which have been subjected to the low pass filter in a horizontal direction.

The reference images or the decoded original images can be subjected to a noise elimination filter instead of the low pass filter. Resultant pixel values can be used as the pixel values of the respective pixels in the reference/target block surrounding images. For example, a pixel value of each pixel in a reference block surrounding image can be found by the following Formula (14) and a pixel value of each pixel in a target block surrounding image can be found by the following Formula (15):

$$STr(i,0) = median\left( Ir(Xr+i-1,Yr\text{-}1), Ir(Xr+i,Yr\text{-}1), Ir(Xr+i+1,Yr\text{-}1) \right) \quad (i=0\,...\,L\text{-}1)$$
$$SLr(0,j) = median\left( Ir(Xr\text{-}1,Yr+j\text{-}1), Ir(Xr\text{-}1,Yr+j), Ir(Xr\text{-}1,Yr+j+1) \right) \quad (j=0...M\text{-}1)$$

$$...(14)$$

$$STc(i,0) = median\big(Ic(Xc+i-1,Yc\text{-}1),Ic(Xc+i,Yc\text{-}1),Ic(Xc+i+1,Yc\text{-}1)\big) \quad (i = 0 \ldots L\text{-}1)$$

$$SLc(0,j) = median\big(Ic(Xc\text{-}1,Yc+j\text{-}1),Ic(Xc\text{-}1,Yc+j),Ic(Xc\text{-}1,Yc+j+1)\big) \quad (j = 0\ldots M\text{-}1)$$

$$\ldots(15)$$

In Formulae (14) and (15), median(a,b,c) is a function which causes a median of three numbers a, b, and c.

The above use of the noise elimination filter allows an elimination of components caused by noise from variations in pixel value between the reference block surrounding image and the target block surrounding image. Hence, it is possible to more accurately compensate a luminance variation between frames by use of the reference/target block surrounding images which have been subjected to the noise elimination filter.

<Weighting in Correspondence with Distance>

The above description states that as indicated in Formula (4), each of the luminance variation compensated image preparing sections 142 and 242 finds a luminance variation compensated image by adding luminance variation estimate amounts between frames to respective pixel values of pixels in a motion compensated image 106.

The luminance variation estimate amounts between frames are found from pixels located to the upper side of or to the left of the reference/target blocks. Accuracy in luminance variation estimate amount is thus lower as a location is closer, in the reference/ target block, to a lower right corner. In view of this characteristic, a luminance variation compensated image can be corrected in accordance with the following Formula (16) instead of the Formula (4):

$$P(i,j) = R(i,j) + w(i,j) \times O(i,j) \quad (i = 0\ldots L\text{-}1, \ j = 0\ldots M\text{-}1) \qquad \ldots(16)$$

In the Formula (16), w(i, j) represents an accuracy in estimate amount of a luminance variation between frames at coordinates (i, j) in a block. w(i, j) is found by the following Formula (17):

$$w(i,j) = \alpha - \beta \times \min(i,j) \quad (i = 0\ldots L\text{-}1, \ j = 0\ldots M\text{-}1) \quad \ldots(17)$$

In the Formula (17), $\alpha$ represents a value indicating accuracy in luminance variation estimate amount at coordinates (0, 0) in the block, and $\beta$ represents a value indicating a rate at which the accuracy decreases in accordance with a distance from an upper side or left side of the block. According to Formula (17), w(i, j) decreases in proportion to a shorter one of the following two distances: a distance from the left side of the block; and a distance from the upper side of the block. (a) of Fig. 7 shows, as an example, w(i, j) found by Formula (17) in a case where the block has a size of 4 × 4 pixels, $\alpha$ = 1, and $\beta$ = 0.25.

By preparing a luminance variation compensated image with the use of the method, it is possible to compensate a luminance variation while further considering the accuracy in estimate amount of a luminance variation between frames. This allows a reduction in possibility that a difference occurs between a luminance variation estimate amount and an actual luminance variation.

Note that w(i, j) is preferably found by the following Formula (18), in the case where a luminance variation estimate amount is found only from the pixels located to the upper side of the reference/target blocks.

$$w(i,j) = \alpha - \beta \times j \quad (i = 0\ldots L\text{-}1, \ j = 0\ldots M\text{-}1) \qquad \ldots(18)$$

In this case, the distance from the left side of the block is irrelevant to the accuracy in luminance variation estimate amount. As such, Formula (18) finds more precisely the accuracy in luminance variation estimate amount than Formula (17) does. (b) of Fig. 7 shows w(i, j) found by Formula (18) in a case where the block has a size of 4 × 4 pixels, $\alpha$ = 1 and $\beta$ = 0.25.

Note that w(i, j) is preferably found by the following Formula (19), in the case where a luminance variation estimate amount is found only from the pixels located to the left of the reference/target blocks:

$$w(i,j) = \alpha - \beta \times i \quad (i = 0...L\text{-}1, \ j = 0...M\text{-}1) \ ...(19)$$

In this case, the distance from the upper side of the block is irrelevant to the accuracy in luminance variation estimate amount. As such, Formula (19) finds more precisely the accuracy in luminance variation estimate amount than Formula (17) does. (c) of Fig. 7 shows w(i, j) found by Formula (19) in a case where the block has a size of 4 × 4 pixels, $\alpha = 1$ and $\beta = 0.25$.

<Use of Rate of Luminance Variation>

Each of the luminance variation compensated image preparing sections 142 and 242 can derive a luminance variation compensated image by a method other than the method of adding luminance variation estimate amounts between frames to respective pixel values of pixels in a motion compensated image 106. For example, a luminance variation compensated image can be found by (i) finding an estimate luminance variation rate Q(i, j), which is an estimated rate of a luminance variation between frames for each pixel location in a target block Bc, and then (ii) multiplying a pixel value of each pixel in a motion compensated image 106 by a corresponding estimate luminance variation rate Q(i, j) between the frames. In other words, a pixel value P(i, j) of each pixel in the luminance variation compensated image can be found from Formula (20) below in accordance with (i) a pixel value R(i, j) of a pixel in the motion compensated image 106 and (ii) an estimate luminance variation rate Q(i, j) for the pixel.

$$P(i,j) = R(i,j) \times Q(i,j) \qquad (i = 0...L\text{-}1, \ j = 0...M\text{-}1) \qquad ...(20)$$

Q(i, j) can be found from the following Formula (21), for example:

$$Q(i,j) = \sqrt{\frac{Sc(0,j)}{Sr(0,j)} \times \frac{Sc(i,0)}{Sr(i,0)}} \qquad (i = 0...L\text{-}1, \ j = 0...M\text{-}1) \qquad ...(21)$$

In this case, Q(i, j) provides, as an estimate luminance variation rate, a value corresponding to a geometric mean of rates of variations in pixel values of respective pixels in a target block surrounding area which pixels are located directly to the upper side of and directly to the left of a pixel IC(i, j) located in a target block. According to Formulae (20) and (21), luminance variations can be compensated at different rates in accordance with luminances of respective pixels in a motion compensated image. This allows a more accurate compensation for a luminance variation between frames.

[Embodiment 2]

A second embodiment of each of the moving image encoder and the moving image decoder according to the present invention is described below with reference to Figs. 8 through 11.

<Moving Image Encoder>

Fig. 8 is a block diagram illustrating an arrangement of a moving image encoder 1000a of the present embodiment. The moving image encoder 1000a includes: an orthogonal transformation section 120; a quantization section 121; an inverse quantization section 122; an inverse orthogonal transformation section 123; a frame memory 124; a motion detection section 125; a motion compensation section 126; a luminance variation detection/compensation section 127a; and a variable length coding section 128a.

In the moving image encoder 1000a, constituents other than the luminance variation detection/compensation section 127a and the variable length coding section 128a are identical to the respective constituents which are included in the moving image encoder 1000 of Fig. 2 and which are indicated by the respective reference numerals. Such constituents of the moving image encoder 1000a are therefore not described here.

The luminance variation detection/compensation section 127a detects luminance variations between frames in accordance with a decoded original image and a reference image which are stored in the frame memory 124. A detected luminance variation is supplied, as luminance variation detection information 108, to the variable length coding section 128. The luminance variation detection/compensation section 127a corrects a motion compensated image 106 in accordance with the luminance variation detection information 108 so as to compensate the luminance variation. These operations are identical to those of the luminance variation detection/compensation section 127 included in the moving image encoder 1000.

The luminance variation detection/compensation section 127a of the moving image encoder 1000a differs from the luminance variation detection/compensation section 127 of the moving image encoder 1000 in that the luminance variation detection/compensation section 127a can compensate a luminance variation between frames by use of various methods. The luminance variation detection/compensation section 127a is configured to (i) select a method for compensating for a luminance variation between frames and (ii) supply, to the variable length coding section 128a, luminance variation compensating method information 150 indicative of the selected method together with the luminance variation detection information 108.

The variable length coding section 128a encodes transformation coefficient levels 102, a motion vector 105, the luminance variation detection information 108, and the luminance variation compensation method information 150 so as to obtain their respective pieces of encoded data. Further, the variable length coding section 128a carries out multiplexing with respect to the pieces of encoded data so as to prepare encoded data 200. The encoded data 200 prepared by the variable length coding section 128 is supplied to the outside.

<Luminance Variation Detection/Compensation Section>

The following description deals in detail with the luminance variation detection/compensation section 127a with reference to Fig. 9. Fig. 9 is a block diagram illustrating an arrangement of the luminance variation detection/compensation section 127a.

As illustrated in Fig. 9, the luminance variation detection/compensation section 127a includes: a reference block surrounding image preparing section 140; a target block surrounding image preparing section 141; a luminance variation compensated image preparing section A 151; a luminance variation compensated image preparing section B 152; a luminance variation compensated image preparing section C 153; a luminance variation compensation method determination section 154; and a predicted image selecting switch 155.

The reference block surrounding image preparing section 140 and the target block surrounding image preparing section 141 among the constituents of the luminance variation detection/compensation section 127a are identical to the respective constituents which are included in the luminance variation detection/compensation section 127 of Fig. 1 and which are indicated by the respective reference numerals. The two sections are therefore not described here.

Each of the luminance variation compensated image preparing section A 151, the luminance variation compensated image preparing section B 152, and the luminance variation compensated image preparing section C 153 finds a luminance variation estimate amount $O(i, j)$ on the basis of a reference block surrounding image and a target block surrounding image. Then, each of the luminance variation compensated image preparing sections corrects, in accordance with the luminance variation estimate amounts $O(i, j)$, a motion compensated image 106 so as to compensate a luminance variation between frames. The three sections, however, find the luminance variation estimate amounts $O(i, j)$ by different methods.

Specifically, the luminance variation compensated image preparing section A 151 compensates for a luminance variation between frames in accordance with Formulae (4), (5), and (7) above. More specifically, the luminance variation compensated image preparing section A 151 prepares a luminance variation compensated image A, which is an image obtained by correcting a pixel value of each pixel in a motion compensated image 106 in accordance with variations in luminance of pixels in a target block surrounding area located adjacently to an upper side of a corresponding block.

The luminance variation compensated image preparing section B 152 compensates for a luminance variation between frames in accordance with Formulae (4), (5), and (8) above. More specifically, the luminance variation compensated image preparing section B 152 prepares a luminance variation compensated image B, which is an image obtained by correcting a pixel value of each pixel in a motion compensated image 106 in accordance with variations in luminance of pixels in a target block surrounding area located adjacently to a left side of a corresponding block.

The luminance variation compensated image preparing section C 153 compensates for a luminance variation between frames in accordance with Formulae (4), (5), and (9) above. More specifically, the luminance variation compensated image preparing section C 153 prepares a luminance variation compensated image C, which is an image obtained by correcting a pixel value of each pixel in a motion compensated image 106 in accordance with variations in luminance of pixels in a target block surrounding area located adjacently to an upper side or left side of a corresponding block.

The luminance variation compensation method determination section 154 compares an input image 100 with each of three candidate potential luminance variation compensated images (i.e., the candidate luminance variation compensated images A, B, and C) and the motion compensated image 106. In a case where the motion compensated image 106 is more similar to the input image 100 than to any of the three candidate luminance variation compensated images, the luminance variation compensation method determination section 154 determines that there occurs no luminance variation, whereas otherwise determines that there occurs a luminance variation. The luminance variation compensation method determination section 154 supplies luminance variation detection information 108 indicative of a determined result to the variable length coding section 128a and the predicted image selecting switch 155.

The luminance variation compensation method determination section 154 selects one out of the three candidate luminance variation compensated images which one is the most similar to the input image 100. The luminance variation compensation method determination section 154 supplies, to the variable length coding section 128a and the predicted image selecting switch 155, luminance variation compensation method information 150 indicative of a method used to prepare the one selected out of the three candidate luminance variation compensated images.

A SAD between the input image 100 and the respective images (i.e., the three candidate luminance variation compensated images and the motion compensated image 106) can be used as a similarity of each of the images to the input image 100. In this case, an image used in finding a SAD is more similar to the input image 100 as the SAD is smaller.

The predicted image selecting switch 155 selects one out of the three candidate potential luminance variation compensated images and the motion compensated image 106 in accordance with the luminance variation detection information 108 and the luminance variation compensation method information 150. The predicted image selecting switch 155 outputs the one thus selected as a predicted image 107.

More specifically, in a case where the luminance variation detection information 108 indicates that there occurs no luminance variation, the predicted image selecting switch 155 selects the motion compensated image 106 as the predicted image 107. In a case where the luminance variation detection information 108 indicates that there occurs a luminance variation, the predicted image selecting switch 155 selects, as the predicted image 107, the luminance variation compensated image prepared by the method indicated by the luminance variation compensation method information 150.

As described above, in the case where it is determined that there occurs a luminance variation, the luminance variation detection/compensation section 127a finds a predicted image 107 which has been subjected to the compensation for a luminance variation between frames by use of a most suitable one of the three different luminance variation compensation methods. As such, the predicted image 107 more accurately approximates the input image 100, as compared to a case in which a single luminance variation compensation method is used. Consequently, a smaller amount of information is contained in a prediction residual 101. The moving image encoder 1000a illustrated in Fig. 8 can thus encode, with use of a small amount of encoded data, transformation coefficient levels 102 obtained by carrying out the discrete cosine transform and quantization with respect to the prediction residual 101.

<Moving Image Decoder>

With reference to Fig. 10, the following description deals with a moving image decoder 2000a for decoding the encoded data 200, which has been encoded by the moving image encoder 1000a illustrated in Fig. 8. Fig. 10 is a block diagram illustrating an arrangement of the moving image decoder 2000a.

As illustrated in Fig. 10, the moving image decoder 2000a includes: a variable length code decoding section 220a; an inverse quantization section 221; an inverse orthogonal transformation section 222; a frame memory 223; a motion compensation section 224; and a luminance variation compensation section 225a.

In the moving image decoder 2000a, constituents other than the luminance variation compensation section 225a and the variable length code decoding section 220a are identical to the respective constituents which are included in the moving image decoder 2000 of Fig. 3 and which are indicated by the respective reference numerals. Such constituents of the moving image decoder 2000a are therefore not described here.

The variable length code decoding section 220a decodes the encoded data 200 so as to obtain a motion vector 201, a luminance variation detection information 202, transformation coefficient levels 203, and luminance variation compensation method information 250. The motion vector 201 is supplied to the motion compensation section 224 and the luminance variation compensation section 225. The luminance variation detection information 202 and the luminance variation compensation method information 250 are supplied to the luminance variation compensation section 225a. The transformation coefficient levels 203 are supplied to the inverse quantization section 221.

The luminance variation compensation section 225a corrects a motion compensated image 206 in accordance with the motion vector 201 the luminance variation detection information 202 the luminance variation compensation method information 250 and a decoded original image and a reference image both stored in the frame memory 223. This causes luminance variations between the frames to be compensated. These operations are identical to those of the luminance variation compensation section 225a included in the moving image decoder 2000.

The luminance variation compensation section 225a of the moving image decoder 2000a differs from the luminance variation compensation section 225a of the moving image decoder 2000 in that the luminance variation compensation section 225a of the moving image decoder 2000a can compensate a luminance variation between frames by use of various methods. The luminance variation compensation section 225a is configured to determine, in accordance with the luminance variation compensation method information 250, a method for compensating for a luminance variation between frames.

<Luminance Variation Compensation Section>

The following description deals in detail with the luminance variation compensation section 225a with reference to Fig. 11. Fig. 11 is a block diagram illustrating an arrangement of the luminance variation compensation section 225a.

As illustrated in Fig. 11, the luminance variation compensation section 225a includes: a reference block surrounding image preparing section 240; a target block surrounding image preparing section 241; a luminance variation compensated image preparing section A 251; a luminance variation compensated image preparing section B 252; a luminance variation compensated image preparing section C 253; and a predicted image selecting switch 254.

The reference block surrounding image preparing section 240 and the target block surrounding image preparing section 241 among the constituents of the luminance variation compensation section 225a are identical to the respective constituents which are included in the luminance variation compensation section 127 of Fig. 4 and which are indicated by the respective reference numerals. The two sections are therefore not described here.

Each of the luminance variation compensated image preparing section A 251, the luminance variation compensated image preparing section B 252, and the luminance variation compensated image preparing section C 253 finds a luminance variation estimate amount O(i, j) in accordance with a reference block surrounding image and a target block surrounding image. Then, each of the luminance variation compensated image preparing sections corrects, in accordance with the luminance variation estimate amount O(i, j), a motion compensated image 206. This causes a luminance variation between frames to be compensated. The three sections, however, find the luminance variation estimate amounts O(i, j) by different methods.

Specifically, each of the luminance variation compensated image preparing section A 251, the luminance variation compensated image preparing section B 252, and the luminance variation compensated image preparing section C 253 is configured to compensate a luminance variation between frames by use of a corresponding one of the methods which are identical to the respective methods used by the luminance variation compensated image preparing section A 151, the luminance variation compensated image preparing section B 152, and the luminance variation compensated image preparing section C 153 of the moving image encoder 1000a.

The predicted image selecting switch 254 selects an image from among the three potential luminance variation compensated images and the motion compensated image 106 on the basis of the luminance variation detection information 202 and the luminance variation compensation method information 250. The predicted image selecting switch then outputs the selected image as a predicted image 207. The above selection is carried out by a method identical to the selection method used by the predicted image selecting switch 155 included in the luminance variation detection/compensation section 127a of the moving image encoder 1000a. Therefore, the selection method used by the predicted image selecting switch 254 is not described here.

The description of the luminance variation compensation section 225a ends here. As described above, according to the luminance variation compensation section 225a, a predicted image 207 which has been subjected to compensation for a luminance variation between frames is prepared with the use of a method identical to the method by which the encoded data 200 is prepared.

The description of the moving image decoder 2000a ends here. As described above, the moving image decoder, it is possible to prepare a predicted image which has been subjected to the accurate compensation for the luminance variation between the frames, by (i) selecting, for each block, the most suitable one out of a plurality of luminance variation compensation methods and then (ii) compensating for a luminance variation between frames. The predicted image reproduces the original image (i.e., the input image supplied to the moving image encoder 1000a) more precisely than a predicted image in which no luminance variation has been compensated. Hence, when a playback image is obtained by adding a restored prediction residual to the predicted image in which the luminance variation has been compensated, its original image is reproduced more faithfully.

<Combination of Luminance Variation Compensation Methods>

The above description discusses the case where the three luminance variation compensation methods are combined and used. Alternatively, any two or more luminance variation compensation methods can be combined and used.

For example, the following three luminance variation compensation methods can be combined and used:

Method 1: A luminance variation compensation method in which a pixel value P(i, j) is found from Formulae (16), (18), (5), and (7) (A luminance variation is compensated in accordance with an amount of variation in pixel value of pixels adjacent to an upper side of a target block, which amount is weighted in accordance with a distance from the upper side of the block.)

Method 2: A luminance variation compensation method in which a pixel value P(i, j) is found from Formulae (16), (18), (5), and (8) (A luminance variation is compensated in accordance with an amount of variation in pixel value of pixels adjacent to a left side of a target block, which amount is weighted in accordance with a distance from the left side of the block.)

Method 3: A luminance variation compensation method in which a pixel value P(i, j) is found from Formulae (16), (18), (5), and (9) (A luminance variation is compensated in accordance with an amount obtained by weighted averaging of amounts of variation in pixel value of pixels which are adjacent respectively to an upper side and left side of a target block, is weighted in correspondence with a shorter one of the following two distances: a distance between the pixel and the upper side of the block; and a distance between the pixel and the left side of the block.)

According to the combination of the methods 1 through 3, the amount of variation in pixel value which has been weighted in accordance with the distance from the upper side or from the left side of the target block can be used as a luminance variation estimate amount. This allows a reduction in possibility that a difference occurs between a luminance variation estimate amount and an actual luminance variation.

The following two luminance variation compensation methods can also be combined and used, for example.

Method 1: A luminance variation compensation method in which P(i, j) is found from Formulae (4), (5), and (9) in accordance with (i) a reference block surrounding image found in accordance with Formula (1) and (ii) a target block surrounding image found in accordance with Formula (3) (A Luminance variation is compensated in accordance with the amounts of variations in pixel values of the pixels which are adjacent to the upper side and the left side of the target block, which amounts have been subjected to the weighted average.)

Method 2: A luminance variation compensation method in which P(i, j) is found from Formulae (4), (5), and (9) in accordance with (i) a reference block surrounding image found in accordance with Formula (14) and (ii) a target block surrounding image found in accordance with Formula (15) (A Luminance variation is compensated in accordance with the amounts of variations in pixel values of the pixels which are adjacent to the upper side and the left side of the target block and which have been subjected to noise elimination, which amounts have been subjected to the weighted average.)

The combination of the methods 1 and 2 allows luminance variations to be compensated by use of respective different methods in accordance with the number of noises.

<Encoding of Additional Information>

The variable length coding section 128a of the present embodiment encodes both of the luminance variation detection information 108 and the luminance variation compensation method information 150. It is, however, not always necessary to encode both of them. For example, the encoding can be merely carried out with respect to the luminance variation detection information 108 in the case where the luminance variation detection information 108 indicates that there occurs a luminance variation, whereas the encoding is carried out with respect to both of the luminance variation detection information 108 and the luminance variation compensation method 150 in the case where the luminance variation detection information indicates that there occurs a luminance variation. With the arrangement, it is possible to reduce an amount of encoded data. This is because it is necessary to carry out encoding with respect to information as to which luminance variation compensation method should be used, only in a case where it is necessary to compensate a luminance variation between frames.

As described above, the moving image encoder of the present invention includes correcting means for (i) estimating an amount of variation in luminance of each pixel in a target block, which is currently subjected to encoding, in accordance with (a) a first pixel value of a pixel in a target block surrounding area, the target block surrounding area being adjacent to the target block and (b) a second pixel value of a pixel in a reference block surrounding area in a reference image, on a basis of which reference image a motion compensated prediction is carried out, the reference block surrounding area being adjacent to a reference block corresponding to the target block, and (ii) correcting the first motion compensated image so as to compensate the amount of variation in luminance thus estimated.

The above arrangement enables compensation for local luminance variations between frames while preventing an amount of encoded data from increasing due to additional information or, even if such an increase occurs, minimizing the increase.

The moving image decoder of the present invention includes correcting means for (i) estimating an amount of variation in luminance of each pixel in a target block, which is currently subjected to decoding, in accordance with (a) a first pixel value of a pixel in a target block surrounding area in a decoded image obtained by decoding the encoded data, the target block surrounding area being adjacent to the target block and (b) a second pixel value of a pixel in a reference block surrounding area in a reference image, on a basis of which reference image a motion compensated prediction is carried out, the reference block surrounding area being adjacent to a reference block corresponding to the target block, and (ii) correcting the first motion compensated image so as to compensate the amount of variation in luminance thus estimated.

The above arrangement enables decoding of encoded data encoded by the moving image encoder.

[Supplementary Note]

The present invention is not limited to the description of the embodiments above, but may be altered in various ways by a skilled person within the scope of the claims. Any embodiment based on a proper combination of technical means disclosed in different embodiments is also encompassed in the technical scope of the present invention.

The blocks of the moving image encoder 1000 may, for example, be realized by way of hardware or software as executed by a CPU as follows:

The moving image encoder 1000 includes a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. The objective of the present invention can also be achieved by mounting to the moving image encoder 1000 a computer-readable storage medium containing control program code (executable program, intermediate code program, or source program) for the moving image encoder 1000, which is software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The moving image encoder 1000 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth (registered trademark), 802.11 wireless, HDR, mobile telephone network, satellite line, or terrestrial digital network. The present invention encompasses a carrier wave or data signal transmission in which the program code is embodied electronically.

This description also applies to the moving image encoder 1000a, the moving image decoder 2000, and the moving image decoder 2000a.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

The present invention may also be described as below, for example.

1. A moving image encoder for preparing encoded data by (i) segmenting a frame of a moving image into a plurality of blocks and (ii) encoding a prediction residual for each block which prediction residual corresponds to a difference between an input image and a predicted image, the moving image encoder including: a motion detection section for deriving, in the form of a motion vector, a position of an area in a reference frame which area approximates the input image; a motion compensation section for preparing a motion compensated image on the basis of the motion vector; a target block surrounding image preparing section for preparing a target block surrounding image on the basis of an image in a target block surrounding area; a reference block surrounding image preparing section for preparing a reference block surrounding image on the basis of an image in a reference block surrounding area; and a luminance variation compensated image preparing section for (i) deriving a luminance variation estimate amount indicative of a luminance variation for each position in a target block on the basis of the target block surrounding image and the reference block surrounding image, and (ii) preparing a luminance variation compensated image by correcting the motion compensated image on the basis of the luminance variation estimate amount

2. The moving image encoder according to Item 1, wherein: a pixel value of each pixel in the target block surrounding image corresponds to a pixel value of a pixel in a decoded original image which pixel is adjacent to an upper side or left side of the target block; a pixel value of each pixel in the reference block surrounding image corresponds to a pixel value of a pixel in a reference image which pixel is adjacent to an upper side or left side of a reference block

3. The moving image encoder according to Item 1, wherein: a pixel value of each pixel in the target block surrounding image corresponds to a pixel value of a pixel in a decoded original image which pixel is adjacent to an upper side or left side of the target block and which pixel has been filtered by a low pass filter; a pixel value of each pixel in the reference block surrounding image corresponds to a pixel value of a pixel in a reference image which pixel is adjacent to an upper side or left side of a reference block and which pixel has been filtered by a low pass filter

4. The moving image encoder according to Item 1, wherein: a pixel value of each pixel in the target block surrounding image corresponds to a pixel value of a pixel in a decoded original image which pixel is adjacent to an upper side or left side of the target block and which pixel has been subjected to noise elimination; a pixel value of each pixel in the reference block surrounding image corresponds to a pixel value of a pixel in a reference image which pixel is adjacent to an upper side or left side of a reference block and which pixel has been subjected to noise elimination

5. The moving image encoder according to any one of Items 1 to 4, wherein the luminance variation estimate amount is derived on the basis of a difference in pixel value between a pixel in the target block surrounding image and a corresponding pixel in the reference block surrounding image

6. The moving image encoder according to any one of Items 1 to 5, wherein the luminance variation estimate amount for each pixel in the target block is derived on the basis of a first difference and a second difference, the first difference being a difference in pixel value between (i) a pixel in the target block surrounding image which pixel is located above the pixel in the target block and (ii) a pixel in the reference block surrounding image which pixel is located above a pixel in the reference block which pixel in the reference block corresponds to the pixel in the target block, the second difference being a difference in pixel value between (i) a pixel in the target block surrounding image which pixel is located to the left of the pixel in the target block and (ii) a pixel in the reference block surrounding image which pixel is located to the left of the pixel in the reference block which pixel in the reference block corresponds to the pixel in the target block

7. The moving image encoder according to Item 6, wherein the luminance variation estimate amount for each pixel in the target block is a value obtained by weighted averaging of the first difference and the second difference in correspondence with (i) a distance between the pixel in the target block and a pixel in the target block surrounding image which pixel is located above the pixel in the target block and (ii) a distance between the pixel in the target block and a pixel in the target block surrounding image which pixel is located to the left of the pixel in the target block

8. The moving image encoder according to any one of Items 1 to 7, wherein the luminance variation estimate amount for pixel position in the target block is corrected so that the luminance variation estimate amount has a smaller value for a pixel located at a position in the target block which position is farther away from the upper side or left side of the block

9. The moving image encoder according to any one of Items 1 to 8, further including a luminance variation detection section for preparing luminance variation detection information by determining which of the luminance variation compensated image and the motion compensated image is suited for the predicted image, wherein: an image determined on the basis of the luminance variation detection information as suited for the predicted image is used as the predicted image; and the luminance variation detection information is included in the encoded data

10. The moving image encoder according to any one of Items 1 to 9, wherein the luminance variation compensated image preparing section includes means for preparing luminance variation compensated image candidates by at least two methods, the moving image encoder further including a luminance variation compensation method determination section for determining which of the luminance variation compensated image candidates is suited for the predicted image, wherein: a luminance variation compensated image candidate thus determined as suited for the predicted image is selected as the luminance variation compensated image; and a result of the determination is included in the encoded data

11. The moving image encoder according to Item 10, wherein the luminance variation compensated image preparing section includes means for preparing luminance variation compensated image candidates by at least two methods, the moving image encoder further including a luminance variation compensation method determination section for determining which of the luminance variation compensated image candidates is suited for the predicted image, wherein: a luminance variation compensated image candidate thus determined as suited for the predicted image is selected as the luminance variation compensated image; and a result of the determination is included in the encoded data only in a case where the luminance variation detection information indicates that the luminance variation compensated image is suited for the predicted image

12. A moving image decoder for playing back a moving image by decoding encoded data obtained by sequentially encoding a plurality of blocks into which a frame of the moving image is segmented, the moving image decoder including: a motion compensated prediction section for preparing a motion compensated image by identifying, on the basis of a motion vector decoded from the encoded data, a position of a reference block in a reference frame which reference block is similar to a target block; a target block surrounding image preparing section for preparing a target block surrounding image on the basis of an image in a target block surrounding area; a reference block surrounding image preparing section for preparing a reference block surrounding image on the basis of an image in a reference block surrounding area; and a luminance variation compensated image preparing section for (i) deriving a luminance variation estimate amount between the target block and the reference block on the basis of the target block surrounding image and the reference block surrounding image and (ii) correcting the motion compensated image on the basis of the luminance variation estimate amount

Industrial Applicability

The present invention is widely applicable to (i) a moving image encoder for encoding a moving image by use of a motion compensated prediction and (ii) a moving image decoder for decoding encoded data prepared by the moving image encoder. The present invention is, in particular, suitably applicable to a moving image encoder and a moving image decoder which are compliant with AVC/H264 or MPEG-4. The present invention is further applicable to a device such as (i) a moving image recording device for encoding and recording a moving image on a recording medium or (ii) a moving image reproducing device for playing back a moving image from encoded data stored on a recording medium.

**Claims**

1.  A moving image encoder for preparing encoded data by encoding, for each block, a prediction residual indicative of a difference between a target image to be encoded and a first motion compensated image, the target image corresponding to each of frames which constitute a moving image,
    said moving image encoder, comprising:

    correcting means for (i) estimating an amount of variation in luminance of each pixel in a target block, which is currently subjected to encoding, in accordance with (a) a first pixel value of a pixel in a target block surrounding area in a local decoded image obtained by decoding the encoded data, the target block surrounding area being adjacent to the target block and (b) a second pixel value of a pixel in a reference block surrounding area in a reference image, on a basis of which reference image a motion compensated prediction is carried out, the reference block surrounding area being adjacent to a reference block corresponding to the target block, and (ii) correcting the first motion compensated image so as to compensate the amount of variation in luminance thus estimated.

2.  The moving image encoder according to claim 1, wherein:

    the target block surrounding area is at least one of (i) a first area in the local decoded image which first area is adjacent to an upper side of the target block and (ii) a second area in the local decoded image which second area is adjacent to a left side of the target block; and
    the reference block surrounding area is at least one of (i) a third area in the reference image which third area is adjacent to an upper side of the reference block and (ii) a fourth area in the reference image which fourth area is adjacent to a left side of the reference block.

3.  The moving image encoder according to claim 1, wherein:

    the target block surrounding area is at least one of (i) a first area in the local decoded image which has been subjected to a low pass filter which first area is adjacent to an upper side of the target block and (ii) a second area in the local decoded image which has been subjected to a low pass filter which second area is adjacent to a left side of the target block; and
    the reference block surrounding area is at least one of (i) a third area in the reference image which has been subjected to a low pass filter which third area is adjacent to an upper side of the reference block and (ii) a fourth area in the reference image which has been subjected to a low pass filter which fourth area is adjacent to a left side of the reference block.

4.  The moving image encoder according to claim 1, wherein:

    the target block surrounding area is at least one of (i) a first area in the local decoded image which has been subjected to a noise elimination filter which first area is adjacent to an upper side of the target block and (ii) a second area in the local decoded image which has been subjected to a noise elimination filter which second area is adjacent to a left side of the target block; and
    the reference block surrounding area is at least one of (i) a third area in the reference image which has been subjected to a noise elimination filter which third area is adjacent to an upper side of the reference block and (ii) a fourth area in the reference image which has been subjected to a noise elimination filter which fourth area is adjacent to a left side of the reference block.

5. The moving image encoder according to any one of claims 1 to 4, wherein the correcting means estimates the amount of variation in luminance by finding a difference between (i) a first pixel value of a first pixel in the target block surrounding area and (ii) a second pixel value of a second pixel in the reference block surrounding area, the second pixel corresponding to the first pixel.

6. The moving image encoder according to claim 5, wherein
the correcting means estimates the amount of variation in luminance of said each pixel in the target block in accordance with at least one of a first difference value and a second difference value,
the first difference value indicating a difference between (i) a pixel value of a first pixel in the target block surrounding area which first pixel is located above said each pixel and (ii) a pixel value of a first pixel in the reference block surrounding area which first pixel is located above a reference pixel in the reference image, the reference pixel corresponding to said each pixel,
the second difference value indicating a difference between (i) a pixel value of a second pixel in the target block surrounding area which second pixel is located on a left of said each pixel and (ii) a pixel value of a second pixel in the reference block surrounding area which second pixel is located on a left of the reference pixel.

7. The moving image encoder according to claim 6, wherein the correcting means estimates the amount of variation in luminance of each pixel in the target block, by weighting the first difference value and the second difference value in accordance with (i) a distance between said each pixel and the first pixel and (ii) a distance between said each pixel and the second pixel so that weighted average is carried out with respect to the first difference value and the second difference value.

8. The moving image encoder according to any one of claims 1 to 7, wherein the amount of variation in luminance, estimated with respect to said each pixel in the target block, is corrected by the correcting means so as to be smaller as said each pixel is farther away from an upper side or left side of the target block.

9. The moving image encoder according to any one of claims 1 to 8, further comprising:

   determining means for determining which of (i) the first motion compensated image and (ii) a second motion compensated image corrected by the correcting means is suited for a predicted image,
   the moving image encoder (i) encoding a prediction residual indicative of a difference between the target image to be encoded and one of the first and second motion compensated images which has been determined by the determining means to be suited for the predicted image and (ii) adding a result determined by the determining means to the encoded data.

10. The moving image encoder according to any one of claims 1 to 8, wherein:

   the correcting means selects one out of at least two correction methods each for correcting the first motion compensated image; and
   the moving image encoder adds, to the encoded data, information indicative of the one out of at least two correction methods selected by the correcting means.

11. The moving image encoder according to claim 10, further comprising:

   determining means for determining which of (i) the first motion compensated image and (ii) a second motion compensated image corrected by the correcting means is suited for a predicted image,
   the moving image encoder adding, to the encoded data, information indicative of the one out of at least two correction methods selected by the correcting means, only in a case where the determining means has determined that the second motion compensated image is suited for the predicted image.

12. A moving image decoder for decoding encoded data prepared by encoding, for each block, a prediction residual indicative of a difference between a target image to be encoded and a first motion compensated image, the target image corresponding to each of frames which constitute a moving image,
said moving image encoder, comprising:

   correcting means for (i) estimating an amount of variation in luminance of each pixel in a target block, which is currently subjected to decoding, in accordance with (a) a first pixel value of a pixel in a target block surrounding area in a decoded image obtained by decoding the encoded data, the target block surrounding area being adjacent to the target block and (b) a second pixel value of a pixel in a reference block surrounding area in a reference image, on a basis of which reference image a motion compensated prediction is carried out, the reference block surrounding area being adjacent to a reference block corresponding to the target block, and (ii) correcting the first motion compensated image so as to compensate the amount of variation in luminance thus estimated.

FIG. 1

FIG. 2

FIG. 3

FIG. 4

EP 2 234 403 A1

FIG. 5

# FIG. 6

(a)

STr

REFERENCE FRAME Ir

REFERENCE BLOCK
SURROUNDING AREA Sr

SLr

REFERENCE BLOCK

MOTION VECTOR

Bc

(b)

TARGET FRAME Ic

STc

TARGET BLOCK
SURROUNDING
AREA Sc

SLc

TARGET BLOCK Bc

FIG. 7

(a)

i

| 1.0 | 1.0 | 1.0 | 1.0 |
| 1.0 | 0.75 | 0.75 | 0.75 |
| 1.0 | 0.75 | 0.5 | 0.5 |
| 1.0 | 0.75 | 0.5 | 0.25 |

j

(b)

i

| 1.0 | 1.0 | 1.0 | 1.0 |
| 0.75 | 0.75 | 0.75 | 0.75 |
| 0.5 | 0.5 | 0.5 | 0.5 |
| 0.25 | 0.25 | 0.25 | 0.25 |

j

(c)

i

| 1.0 | 0.75 | 0.5 | 0.25 |
| 1.0 | 0.75 | 0.5 | 0.25 |
| 1.0 | 0.75 | 0.5 | 0.25 |
| 1.0 | 0.75 | 0.5 | 0.25 |

j

FIG. 8

FIG. 9

EP 2 234 403 A1

FIG. 10

FIG. 11

EP 2 234 403 A1

## INTERNATIONAL SEARCH REPORT

| International application No. |
|---|
| PCT/JP2008/070991 |

### A. CLASSIFICATION OF SUBJECT MATTER
*H04N7/32(2006.01)i*

According to International Patent Classification (IPC) or to both national classification and IPC

### B. FIELDS SEARCHED

Minimum documentation searched (classification system followed by classification symbols)
H04N7/24-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2006/128072 A2 (NTT DOCOMO, INC.), 30 November, 2006 (30.11.06), Pages 6 to 12 & US 2006/0268166 A1 | 1-12 |
| A | JP 2007-43651 A (NTT DOCOMO, INC.), 15 February, 2007 (15.02.07), Par. Nos. [0054] to [0197] & WO 2007/004678 A1    & KR 10-2008-0019294 A | 1-12 |
| A | JP 2005-210258 A (Nippon Telegraph And Telephone Corp.), 04 August, 2005 (04.08.05), Par. Nos. [0012] to [0030] (Family: none) | 1-12 |

☒ Further documents are listed in the continuation of Box C.　　☐ See patent family annex.

| | |
|---|---|
| *　Special categories of cited documents:<br>"A"　document defining the general state of the art which is not considered　to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>04 December, 2008 (04.12.08) | Date of mailing of the international search report<br>16 December, 2008 (16.12.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2008/070991 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-231045 A  (NEC Corp.),<br>24 August, 2001 (24.08.01),<br>Par. Nos. [0036] to [0069]<br>& US 2001/0014125 A1 | 1-12 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10136385 A